# EUROPÄISCHE PATENTANMELDUNG

(11) **EP 3 988 369 A1**
(43) Veröffentlichungstag der Anmeldung: **27.04.2022**
(21) Anmeldenummer: 21204347.5
(22) Anmeldetag: 22.10.2021
(51) Int. Cl.: B60K 35/00, G06Q 10/06, B60W 50/14, G07C 5/00, B60P 3/32, B60K 15/03

(54) **VERFAHREN ZUR RESSOURCENABSCHÄTZUNG BEI FREIZEITFAHRZEUGEN**

(30) Priorität: 22.10.2020 DE 102020127898
(71) Anmelder: Erwin Hymer Group SE, 88339 Bad Waldsee (DE)
(72) Erfinder: Dr. Freimann, Rüdiger, 88436 Eberhardzell (DE); Notz, Andreas, 87439 Kempten (DE); Stickelmann, Calvin, 88427 Bad Schussenried (DE); Strobel, Gero, 88339 Bad Waldsee (DE)
(74) Vertreter: Waller, Stefan

(57) **Zusammenfassung**

Bei einem Verfahren zur Ressourcenabschätzung bei einem Freizeitfahrzeug, insbesondere Wohnmobil oder Wohnanhänger, mit Ressourcen für die Nutzung während des Bewohnens, wobei die Ressourcen eines oder mehrere aus Frischwasservorratsmenge, freies Abwassertankvolumen, Gasvorrat und in einem elektrischen Energiespeicher, insbesondere einem Akkumulator, gespeicherte Energie zur Versorgung von Geräten und Vorrichtungen für den Wohnbereich des Freizeitfahrzeug mindestens umfassen, wobei eine Steuerungsvorrichtung in einem ersten Schritt über Sensorelemente und/oder durch Berechnung Füllgrade der Ressourcen bestimmt, bestimmt die Steuerungsvorrichtung anhand eines Verbrauchsmodells, das den zeitlichen Verlauf sowie Zusammenhänge des Verbrauchs zwischen den Ressourcen darstellt, eine Reichweite, bis zu der alle erforderlichen Ressourcen mindestens reichen sollten.

## Beschreibung

Die Erfindung betrifft ein Verfahren zur Ressourcenabschätzung bei einem Freizeitfahrzeug nach dem Oberbegriff des Patentanspruchs 1.

Unter einem Freizeitfahrzeug wird vorliegend ein Fahrzeug verstanden, dass zumindest mithilfe von in diesem montierbaren Einrichtungen und Möbeln dem Nutzer eine Möglichkeit zum Schlafen und Wohnen in diesem Fahrzeug bietet. Für eine anderweitige Verwendung, wenn das Fahrzeug nicht als Freizeitfahrzeug zum Campen benutzt wird, können diese Einrichtungen und Möbel zumindest zum Teil ohne großen Aufwand entfernt werden. Weiterhin umfasst der Begriff auch alle Campingfahrzeuge wie Wohnmobile und Wohnwagen, wobei eine Motorisierung der Fahrzeuge nicht zwingend erforderlich ist und ein Freizeitfahrzeug insbesondere auch einen Anhänger umfasst. Solche Freizeitfahrzeuge zeichnen sich durch einen größeren Wohnaufbau aus, wobei in der überwiegenden Anzahl der Fälle nicht die Originalkarosserie beispielsweise eines Kleintransporters zum Einsatz kommt, sondern ein größerer Aufbau von dem Hersteller des Freizeitfahrzeugs auf einem Chassis aufgebaute wird. Bei einem Wohnanhänger als Freizeitfahrzeug wird regelmäßig ein Anhängerchassis genutzt, auf dem ein Wohnaufbau speziell aufgebaut wird.

In einem solchen Freizeitfahrzeug insbesondere als Wohnmobil oder Wohnwagen sind verschiedene Einrichtungen eingebaut, um eine Nutzung auch außerhalb eines Campingplatzes bzw. autark zu ermöglichen. So ist typischerweise oft ein Frischwassertank vorgesehen, mit dem Wasser für eine Kücheneinrichtung, eine Sanitärzelle mit Waschgelegenheit und/oder Dusche zur Verfügung gestellt wird. Weiterhin sind häufig Toiletteneinheiten vorgesehen, insbesondere als Chemietoilette. Verbrauchtes Wasser kann in einem Abwassertank aufgefangen werden und muss entsorgt werden, wenn dieser vollständig gefüllt ist. Eine weitere Ressource, die den Benutzern eines solchen Freizeitfahrzeugs bzw. Wohnmobil oder Wohnwagens zur Verfügung gestellt wird, ist oftmals eine Versorgung mit Gas zum Kochen, Beheizen des Fahrzeugs oder zum Betreiben eines Absorptionskühlgeräts während des Campingbetriebs. Zunehmend von Bedeutung ist auch eine Versorgung mit elektrischer Energie aus Batterien, eventuell auch kombiniert mit Solarzellen zum Nutzen der Sonnenenergie und zumindest teilweisen Wiederaufladen der Batterien. Mit dem Strom kann dann ein eigenes Netz des Freizeitfahrzeugs und eine Vielzahl von Unterhaltungs- oder sonstigen Geräten betrieben werden. Unter dem Begriff Ressourcen, von denen abhängt, wie lange ein Campen autark und ohne Versorgung bzw. Entsorgung möglich ist, können daher eines oder mehrere aus Wasservorräten, freiem Abwassertankvolumen, Gasvorrat und oder Ladezustand einer Batterie zusammengefasst werden.

Bekannt ist eine Füllstandsmessung beispielsweise eines Kraftstofftanks bei einem Kraftfahrzeug und eine Reichweitenbestimmung durch einen Bordcomputer unter Berücksichtigung bekannter Durchschnittsverbrauchswerte. Ebenso ist es im Stand der Technik bekannt, eine Bestimmung des Ladezustandes div. Batterietypen durchzuführen und die Restnutzungszeit von entsprechenden Verbrauchern zu bestimmen. Dies gilt insbesondere für elektrisch angetriebene Fahrzeuge.

Nachteilig an dem bekannten Stand der Technik ist, dass in einem Freizeitfahrzeug diverse, endliche Ressourcenspeicher installiert sind und die Reichweite im Sinne der verbleibenden Nutzungsdauer des Gesamtsystems für den Fahrer nicht in überschaubarer Weise abschätzbar ist. Bereits die Erschöpfung einer Ressource kann die Reichweite in diesem Sinn auf Null reduzieren. Eine Einzelüberwachung einer Mehrzahl von Ressourcen ist unübersichtlich und ermöglicht keine abschließende und schnelle Einschätzung der Notwendigkeit einer Wiederauffüllung oder Entsorgung.

Wünschenswert wäre daher eine Intelligente Bestimmung der voraussichtlichen Erschöpfung der gespeicherten Ressourcen eines Fahrzeugs oder Freizeitfahrzeugs zur Angabe der minimalen und maximalen Reisedauer bzw. Nutzungsdauer im Campingbetrieb.

Der vorliegenden Erfindung liegt daher die Aufgabe zugrunde, ein Verfahren zur Ressourcenabschätzung bei einem Freizeitfahrzeug zur Verfügung zu stellen, das die zuvor genannten Nachteile vermeidet und mit dem eine schnelle und übersichtliche sowie möglichst genaue Einschätzung einer möglichen Reisedauer bzw. Nutzungsdauer im Campingbetrieb möglich ist.

Diese Aufgabe wird durch ein Verfahren zur Ressourcenabschätzung mit den Merkmalen des unabhängigen Patentanspruchs 1 gelöst. Vorteilhafte Weiterbildungen der Erfindung sind in den Unteransprüchen angegeben.

Die Aufgabe wird gelöst durch ein Verfahren zur Ressourcenabschätzung bei einem Freizeitfahrzeug, insbesondere Wohnmobil oder Wohnanhänger, mit Ressourcen für die Nutzung während des Bewohnens, wobei die Ressourcen eines oder mehrere aus Frischwasservorratsmenge, freies Abwassertankvolumen, Gasvorrat und in einem elektrischen Energiespeicher, insbesondere einem Akkumulator, gespeicherte Energie zur Versorgung von Geräten und Vorrichtungen für den Wohnbereich des Freizeitfahrzeug mindestens umfassen, wobei eine Steuerungsvorrichtung in einem ersten Schritt über Sensorelemente und/oder durch Berechnung Füllgrade der Ressourcen bestimmt, bei dem die Steuerungsvorrichtung anhand eines Verbrauchsmodells, das den zeitlichen Verlauf sowie Zusammenhänge des Verbrauchs zwischen den Ressourcen darstellt, eine Reichweite bestimmt, bis zu der alle erforderlichen Ressourcen mindestens reichen sollten.

Vorteilhaft ist die Reichweite eine Zeitdauer.

Durch das Verbrauchsmodell wird ein Bezug zwischen dem Verbrauch der verschiedenen Ressourcen hergestellt und es kann übersichtlich eine Gesamtreichweite, insbesondere als Zeitdauer, dargestellt werden, in der noch alle für ein Wohnen in dem Freizeitfahrzeug erforderlichen Ressourcen zur Verfügung stehen. Die hier aufgezählten Ressourcen müssen dabei nicht abschließend sein und es können beispielsweise auch weitere Ressourcen berücksichtigt werden. Unter einem Energiespeicher zur Versorgung und von Geräten und Vorrichtungen für den Wohnbereich soll eine solche Energieversorgung verstanden werden, die während eines Bewohnens des Freizeitfahrzeuges im Stand genutzt wird. Insbesondere sind dies nicht eine reine Starterbatterie oder eine reine Traktionsbatterie eines elektrisch angetriebenen Fahrzeugs, die sonst für keine Zwecke genutzt werden. Anders als im Stand der Technik muss ein Nutzer vorteilhaft nicht ein System mit vielen verschiedenen Displays in einem Freizeitfahrzeug überwachen und basierend darauf selbst eine Entscheidung für die Ver-/Entsorgung, Einladungsvorgang oder einen Reisestopp zur Versorgung treffen. Neben der Bestimmung der Film gerade über Sensorelemente ist auch eine Bestimmung durch Berechnung denkbar, beispielsweise beim Abwassertank durch die Erfassung des Frischwasserverbrauchs.

In einer vorteilhaften Ausgestaltung wird das Verbrauchsmodell anhand des Verbrauchs der Ressourcen über einen zuvor liegenden Zeitraum, insbesondere einen unmittelbar zuvor liegenden Zeitraum von mehreren Tagen, von der Steuerungsvorrichtung gebildet.

Damit wird unter Berücksichtigung der historischen Ge- und Verbrauchsdaten der Ressourcen in dem Freizeitfahrzeug und der aktuellen Füllstände dem Nutzer eine Prognose über die Zeit bis zur nächsten Erschöpfung mindestens einer Ressource bzw. die verbleibende Nutzungsdauer errechnet und angezeigt.

In einer weiteren Ausgestaltung des Verfahrens kann das Verbrauchsmodell auf statistischen Werten des Verbrauchs der Ressourcen für typische Nutzergruppen basieren, wobei die Nutzergruppe vorgegeben werden kann und insbesondere eine aus den Nutzergruppen "Familie", "Single", "Seniorenehepaar" oder "Junge Erwachsene" ist.

Für jede dieser Gruppen zeigen sich statistisch Unterschiede in dem typischen Verbrauch der Ressourcen. Es sind dabei weitere Nutzergruppen denkbar. Diese Benutzergruppen können über eine Eingabevorrichtung an die Steuerungsvorrichtung eingegeben und eingestellt werden. Es ist auch eventuell denkbar, über eine Schnittstelle generell eine Kommunikation beispielsweise über eine App eines Smartphones mit der Steuerungsvorrichtung vorzusehen. Hier wäre es auch denkbar, automatisiert eine Nutzergruppe festzulegen anhand der Identifizierung des Smartphones und/oder einer Einstellung der App.

Vorteilhaft kann über eine Eingabeschnittstelle ein Nutzer Gewichtungen für einzelne oder mehrere Ressourcen des Verbrauchsmodells vorgeben.

Dadurch können beispielsweise vorhersehbare Änderungen oder Umstände berücksichtigt werden, wie eine weitere hinzukommende Person, oder bevorzugtes individuelles Verhalten.

Die Steuerungsvorrichtung kann über eine Ausgabevorrichtung neben einer Reichweite Vorschläge für das Auffüllen und/oder Erneuern einer nächstfälligen Ressource anzeigen.

In einer weiteren vorteilhaften Ausgestaltung des Verfahrens kann die Steuerungsvorrichtung eine prognostizierte Verlängerung der Reichweite bei Auffüllung und/oder Erneuerung der nächstfälligen Ressource bestimmen und anzeigen.

Dies ermöglicht einen schnellen Überblick über den Gewinn an Reichweite, wenn diese Ressourcen erneuert wird.

Die Steuerungsvorrichtung kann dem Nutzer die Art des Verbrauchsmodells anzeigen.

Nutzer haben dadurch die Möglichkeit, ihre Fahrzeuge und Ressourcen mit höherer Planbarkeit zu nutzen als bisher. Wenn beispielsweise nach dem Stand der Technik eine Anzeige erfolgt: "Wohnraumbatterie: 13,4V" so wird es vorteilhaft durch das hier beschriebene Verfahren möglich, dem beispielsweise eine Information zu geben wie: "Unter Berücksichtigung Ihrer Batterienutzung über die letzten 7 Tage haben Sie noch für 2 weitere Tage Strom". Der Nutzer kann daher insbesondere dahingehend besser planen, dass beispielsweise auch eine Verbrauchsverhalten angepasst werden kann.

Die Aufgabe wird auch gelöst durch ein Freizeitfahrzeug, insbesondere Wohnmobil oder Wohnanhänger, mit Ressourcen für die Nutzung während des Bewohnens, wobei die Ressourcen eines oder mehrere aus Frischwasservorratsmenge, freies Abwassertankvolumen, Gasvorrat und in einem elektrischen Energiespeicher, insbesondere einem Akkumulator, gespeicherte Energie zur Versorgung von Geräten und Vorrichtungen für den Wohnbereich des Freizeitfahrzeug mindestens umfassen, und mit einer Steuerungsvorrichtung die ein Verfahren nach einem der vorherigen Ansprüche durchführt.

Die Prognosen über die verbleibende Reichweite können auf Wunsch des Nutzers von der Steuerungsvorrichtung über eine Benutzerschnittstelle in beispielsweise folgenden Dimensionen "Art des Aufenthalts", "Autarkie", "nächstes Reiseziel" angepasst werden. Die Ergebnisse werden dann in sinnvollen Zeiträumen angegeben (3-6 Tage). In derselben Schnittstelle werden dem Nutzer auch Vorschläge zum Nachfüllen oder Austauschen der einzelnen Ressourcen angeboten.

Es ist denkbar, das hier beschriebene Verfahren mit allen seinen Merkmalen beispielsweise auch bei Nutzfahrzeugen mit Systemen aus verschiedenen Ressourcen oder Yachten anzuwenden.

## Patentansprüche

1. Verfahren zur Ressourcenabschätzung bei einem Freizeitfahrzeug, insbesondere Wohnmobil oder Wohnanhänger, mit Ressourcen für die Nutzung während des Bewohnens, wobei die Ressourcen eines oder mehrere aus Frischwasservorratsmenge, freies Abwassertankvolumen, Gasvorrat und in einem elektrischen Energiespeicher, insbesondere einem Akkumulator, gespeicherte Energie zur Versorgung von Geräten und Vorrichtungen für den Wohnbereich des Freizeitfahrzeug mindestens umfassen, wobei eine Steuerungsvorrichtung in einem ersten Schritt über Sensorelemente und/oder durch Berechnung Füllgrade der Ressourcen bestimmt,
**dadurch gekennzeichnet,**
**dass** die Steuerungsvorrichtung anhand eines Verbrauchsmodells, das den zeitlichen Verlauf sowie Zusammenhänge des Verbrauchs zwischen den Ressourcen darstellt, eine Reichweite bestimmt, bis zu der alle erforderlichen Ressourcen mindestens reichen sollten.

2. Verfahren zur Ressourcenabschätzung nach Anspruch 1,
**dadurch gekennzeichnet,**
**dass** die Reichweite eine Zeitdauer ist.

3. Verfahren zur Ressourcenabschätzung nach Anspruch 1 oder 2,
**dadurch gekennzeichnet,**
**dass** das Verbrauchsmodell anhand des Verbrauchs der Ressourcen über einen zuvor liegenden Zeitraum, insbesondere einen unmittelbar zuvor liegenden Zeitraum von mehreren Tagen, von der Steuerungsvorrichtung gebildet wird.

4. Verfahren zur Ressourcenabschätzung nach einem der vorhergehenden Ansprüche,
**dadurch gekennzeichnet,**
**dass** das Verbrauchsmodell auf statistischen Werten des Verbrauchs der Ressourcen für typische Nutzergruppen basiert, wobei die Nutzergruppe vorgegeben werden kann und insbesondere eine aus den Nutzergruppen "Familie", "Single", "Seniorenehepaar" oder "Junge Erwachsene" ist.

5. Verfahren zur Ressourcenabschätzung nach einem der vorhergehenden Ansprüche,
**dadurch gekennzeichnet,**
**dass** über eine Eingabeschnittstelle ein Nutzer Gewichtungen für einzelne oder mehrere Ressourcen des Verbrauchsmodells vorgeben kann.

6. Verfahren zur Ressourcenabschätzung nach einem der vorhergehenden Ansprüche,
**dadurch gekennzeichnet,**
**dass** die Steuerungsvorrichtung über eine Ausgabevorrichtung neben einer Reichweite Vorschläge für das Auffüllen und/oder Erneuern einer nächstfälligen Ressource anzeigt.

7. Verfahren zur Ressourcenabschätzung nach Anspruch 6,
**dadurch gekennzeichnet,**
**dass** die Steuerungsvorrichtung eine prognostizierte Verlängerung der Reichweite bei Auffüllung und/oder Erneuerung der nächst fälligen Ressource bestimmt und anzeigt.

8. Verfahren zur Ressourcenabschätzung nach einem der vorhergehenden Ansprüche,
**dadurch gekennzeichnet,**
**dass** die Steuerungsvorrichtung dem Nutzer die Art des Verbrauchsmodells anzeigt.

9. Freizeitfahrzeug, insbesondere Wohnmobil oder Wohnanhänger, mit Ressourcen für die Nutzung während des Bewohnens, wobei die Ressourcen eines oder mehrere aus Frischwasservorratsmenge, freies Abwassertankvolumen, Gasvorrat und in einem elektrischen Energiespeicher, insbesondere einem Akkumulator, gespeicherte Energie zur Versorgung von Geräten und Vorrichtungen für den Wohnbereich des Freizeitfahrzeug mindestens umfassen, und mit einer Steuerungsvorrichtung die ein Verfahren nach einem der vorherigen Ansprüche durchführt.
